# EUROPEAN PATENT APPLICATION

(11) **EP 2 080 917 A1**
(43) Date of publication of application: **22.07.2009**
(21) Application number: 08425018.2
(22) Date of filing: 15.01.2008
(51) Int. Cl.: F16B 37/14

(54) **Cover for a connection screw or bolt between a wheel rim and a hub**

(71) Applicant: Lupini Targhe S.p.A., 24040 Pognano (Bergamo) (IT)
(72) Inventor: Capuzzi, Angiolino, 25020 Dello, Brescia (IT)
(74) Representative: Pulieri, Gianluca Antonio

(57) **Abstract**

A cover (4) for a screw or a bolt comprises a bottom base (20), made of a first material, for example a polyamide resin, and an end body (32) surmounting the base, made of a second material, different from the first one, for example polycarbonate or polycarbonate with the addition of ABS.

## Description

The object of the present invention is a cover for a screw or a bolt, in particular for bolts used to connect wheel rims to the respective hubs.

It is known that car manufacturers are very careful to the aesthetic details of the cars made, making considerable efforts to impart a trim appearance to the product, even as time goes by.

To this end, often the bolts for the mechanical connection of the rim of a wheel to the respective hub is provided at the head with a cover having different functions.

For example, the cover, made of a suitable plastic material, may be coated as desired or subject to further processing for aesthetic finish, has a protective function for the bolt head against atmospheric agents that tend to oxidise it, is easily replaced in case of scratches.

However, known covers for bolts exhibit several disadvantages.

Among the others, it has been seen that in order to coat the cover as desired or to subject it to chromium plating or other aesthetic finish processing, it must be made of suitable plastic materials, often difficult to process; such need implies a large number of processing scraps.

The object of the present invention is to make a cover for a screw or a bolt which should meet the above needs and overcome the disadvantages mentioned with reference to the prior art.

Such object is achieved by a cover obtained in accordance with the following claim 1. The dependent claims describe embodiment variations.

The features and the advantages of the cover for a screw or a bolt according to the present invention will appear more clearly from the following description, made by way of an indicative and non-limiting example with reference to the annexed figures, wherein:

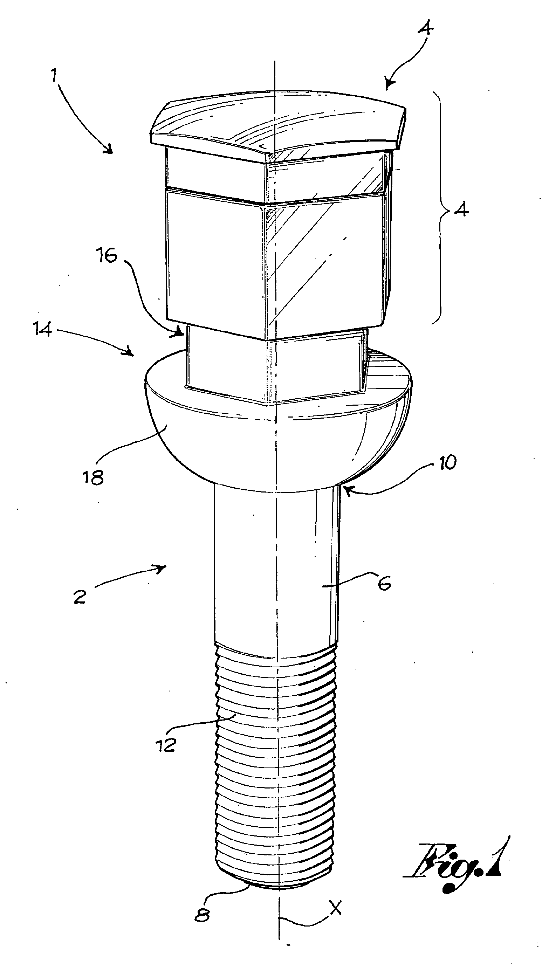

- figure 1 shows a bolt and a cover for bolt according to the present invention, in accordance with an embodiment;

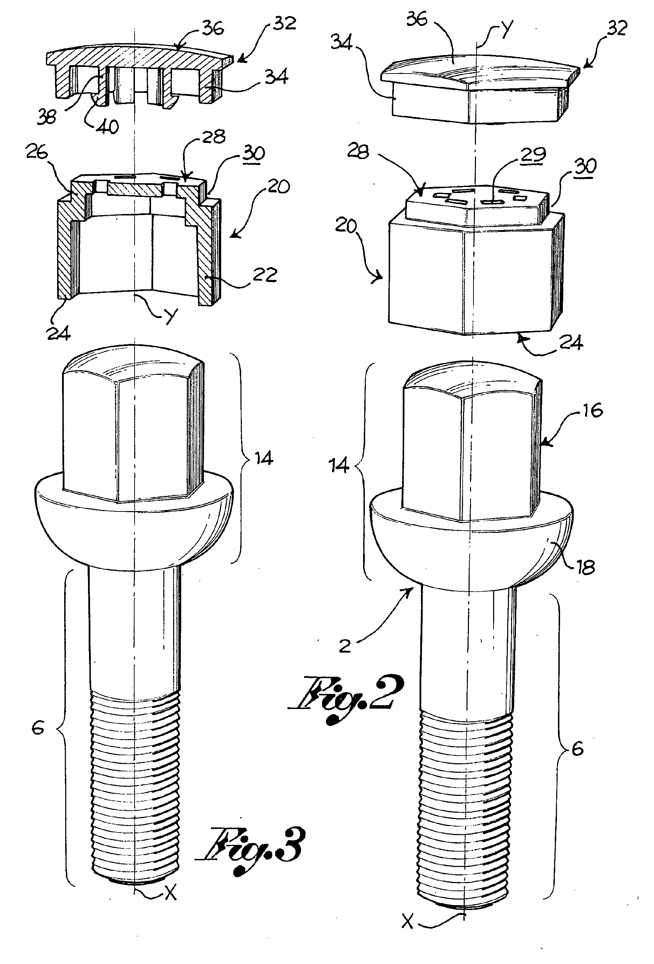

- figure 2 shows an exploded view of the bolt and the cover of figure 1;

- figure 3 shows the bolt and the cover of figure 2 wherein the cover is dissected; and

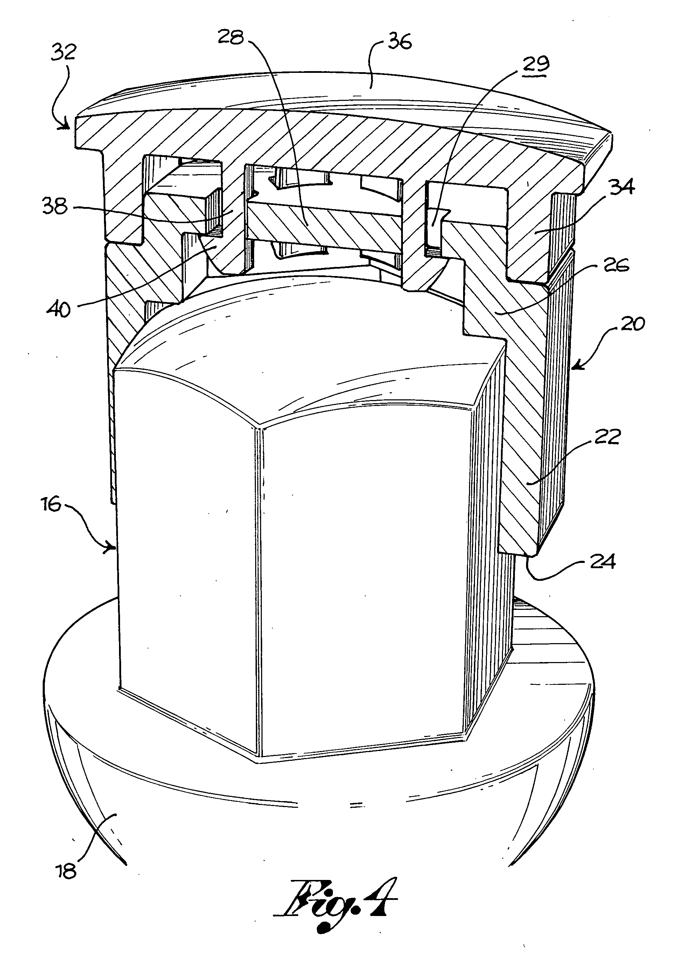

- figure 4 shows the coupled bolt and cover wherein the cover is dissected.

With reference to the annexed figures, reference numeral 1 globally denotes a mounting assembly of a wheel rim to the respective hub, consisting of a bolt 2 and a cover 4.

Bolt 2 comprises a stem 6, which mainly extends along a bolt axis X, between a free end 8 and a connecting end 10.

Stem 6 comprises a threaded portion 12, for screwing the bolt to the hub, for example extending from the free end 8 towards the connecting end 10.

Bolt 2 further comprises a head 14, jointed to stem 6 at the connecting end 10.

Head 14 preferably comprises an enlargement 18, directly jointed to stem 6, having greater section than that of the stem and, for example, shaped as a cap, and a gripping portion 16, jointed to enlargement 18.

The gripping portion 16 is suitable for being engaged by a workshop tool for screwing the bolt to the hub.

For example, the gripping portion 16 exhibits a cross section, that is, a section made with a plane perpendicular to the bolt axis X, polygonal, for example hexagonal.

In other words, the gripping portion 16 exhibits an outer surface, annular about the bolt axis X, shaped to be engaged by a tool.

For example, the outer surface consists of an annular succession of six flat surfaces.

Cover 4 is coupled to head 14 of bolt 2, and in particular it is fitted with interference on the gripping portion 16 thereof.

In particular, cover 4 comprises a base 20 comprising an annular wall 22 that extends about a wall axis Y.

The annular wall 22 is internally shaped to form a constraint to the relative rotation when fitted on the bolt head.

For example, in the make wherein the bolt head is hexagonal, the annular wall 22 is internally shaped so as to have hexagonal section, for coupling with constraint to the rotation of said head.

The annular wall 22 extends from a free annular edge 24, which defines the opening wherethrough base 20 fits on the bolt head, to an opposite top end portion 26, closed by a bottom 28.

Preferably, at the connection between the annular wall 22 and bottom 28, said annular wall 22 exhibits a groove 30, made in the shape of an annular recess, so that the bottom is radially narrowed relative to the annular wall 22.

Preferably, bottom 28 of base 20 exhibits at least one through opening 29.

Base 20 is made of a first material, for example a plastic material, for example a polyamide resin.

Moreover, cover 4 comprises an end body 32, mechanically coupled to the base so as to surmount the annular wall.

In particular, the end body 32 comprises an annular skirt 34 that extends about the wall axis Y, surmounted by a shaped plate 36, which covers the skirt.

Plate 36, is preferably shaped with a polygonal shape, for example hexagonal, for imitating the aesthetic appearance of the bolt head.

According to a preferred embodiment, the end body 32 further comprises at least one tab 38, axially protruding from the shaped plate 36, inside the end body.

Tab 38 ends with a protrusion 40 suitable for making a snap-wise connection between the end body 32 and base 20.

In particular, tab 38 is suitable for penetrating the respective slit 29 of bottom 28 of base 20.

As it is understood, tab and slit constitute an example of snap-wise engagement means suitable for connecting in a releasable manner the end body to the base.

When coupled, base and end body arrange on top of each other, so that skirt 34 is partly seated in groove 30 of base 20, so as to be abutted on the annular wall 22.

Preferably, the annular skirt 34 of the end body 32 is externally shaped like the annular wall 22 of base 20, so as to form shape continuity when coupled: in other words, all the edges of the skirt can be aligned with the edges of the annular wall.

The end body 32 is made of a second material, different from the first one, for example a plastic material, for example a polycarbonate or a polycarbonate with ABS.

Preferably, the second material is more suitable for coating than the first material.

Consequently, innovatively, the cover according to the present invention does not exhibit large scraps in assembly, since the base is easily made of a material suitable for processing and the end body is made of a material suitable for coating or chromium plating or suitable for being subject to other aesthetic finish processes.

Advantageously, moreover, the cover according to the present invention allows a strong engagement between the base and the end body, preventing the latter from detaching from the first one and going lost.

According to a further advantageous aspect, the cover imitates the typical appearance of a bolt head, thus being aesthetically remarkable.

It is clear that a man skilled in the art can make changes to the cover described above in order to meet specific and incidental needs, all falling within the scope of protection defined in the following claims.

## Claims

1. Cover (4) for a screw or a bolt, comprising:
- a base (20) comprising an annular wall (22) internally shaped to form a constraint to the relative rotation when fitted on the bolt head, said base being made of a first material;
- an end body (32), mechanically coupled to the base so as to surmount the annular wall, made of a second material, different from the first one.

2. A cover according to claim 1, wherein the first material is a plastic material.

3. A cover according to claim 2, wherein the first material is a polyamide resin.

4. A cover according to claim 2 or 3, wherein the second material is a plastic material.

5. A cover according to claim 4, wherein the second material is a polycarbonate or a polycarbonate added with ABS.

6. A cover according to any one of the previous claims, comprising snap-wise engagement means for the connection of the base to the end body.

7. A cover according to claim 6, wherein
- the base comprises a bottom (28), jointed to the annular wall, whereon at least one slit (29) is provided; and wherein
- the end body comprises axially protruding tabs (38) suitable for engaging snap-wise with the base bottom, penetrating the respective slit (29).

8. Cover according to any one of the previous claims, wherein the annular wall exhibits an annular groove (30) and the end body comprises an annular skirt (34), seated in the annular groove for moving the end body in abutment with the base.

9. Cover according to claim 8, wherein the end body comprises a shaped plate (36) that surmounts the skirt, said shaped plate having radial dimensions greater than the dimensions of the skirt and/or of the base.

10. Cover according to claim 9, wherein the shaped plate is shaped in a polygonal shape.

11. A mounting assembly (1) comprising:
- a cover (4) made according to any one of the previous claims;
- a bolt (2) comprising a stem (6) for screwing to a hub and a head (14);
wherein the cover is fitted on the head.
